(19) Europäisches Patentamt
European Patent Office
Office européen des brevets

(11) EP 2 184 318 B1

(12) # EUROPEAN PATENT SPECIFICATION

(45) Date of publication and mention of the grant of the patent:
**19.03.2014 Bulletin 2014/12**

(51) Int Cl.:
***C08L 15/00*** *(2006.01)*

(21) Application number: **09012925.5**

(22) Date of filing: **13.10.2009**

(54) **Rubber composition and tire**

Kautschukzusammensetzung und Reifen

Composition de caoutchouc et pneu

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **16.10.2008 JP 2008267930**

(43) Date of publication of application:
**12.05.2010 Bulletin 2010/19**

(73) Proprietor: **Sumitomo Rubber Industries, Ltd.**
**Kobe-shi, Hyogo 651-0072 (JP)**

(72) Inventor: **Uesaka, Kenichi**
**Kobe-shi**
**Hyogo 651-0072 (JP)**

(74) Representative: **Manitz, Finsterwald & Partner GbR**
**Postfach 31 02 20**
**80102 München (DE)**

(56) References cited:
**EP-A1- 0 693 505**
**EP-A1- 0 870 786**
**EP-A1- 1 714 984**
**EP-A1- 1 882 716**
**JP-A- 58 154 742**
**US-A1- 2004 044 157**
**US-B1- 6 211 321**
**US-B1- 6 693 160**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 184 318 B1

## Description

### TECHNICAL FIELD

The present invention relates to a rubber composition and a tire having a tread prepared using the rubber composition.

### BACKGROUND ART

Many studies have conventionally been made to reduce fuel consumption by reducing rolling resistance (expressed also as "by improving rolling resistance performance") of tires. Further reduction in fuel consumption of automobiles has been more and more strongly required in recent years, and a rubber composition for a tread among various tire components, which occupies a large portion of a tire, is required to be more excellent in low heat build-up property.

Known as a method for sufficiently improving low heat build-up property of a rubber composition is a method in which the amount of a reinforcing filler in the rubber composition is reduced. In this case, however, hardness of the rubber composition decreases and thereby the tires obtained are softened, which disadvantageously causes decrease in handling performance (handling stability) and wet grip performance of automobile and causes decrease in abrasion resistance of tires.

Patent Document 1 discloses a rubber composition for tires which contains both anhydrous silica and hydrous silica in order to improve wet skid resistance. However, there remains a problem that low heat build-up property cannot be sufficiently improved.

Patent Document 1: JP-A 2003-192842

US 6,693,160 B1 discloses a rubber composition being suitable to be used for the tread of a tire, wherein the rubber composition comprises a filler, like carbon black and/or silica, and a rubbery polymer containing repeat units derived from at least one conjugated diolefin monomer, at least one nitrogen-containing functionalized monomer and optionally other monomers, like vinyl aromatic compounds. A similar composition is also disclosed in US 2004/0044157 A1.

EP 1 882 716 A1 discloses a rubber composition for a tread and/or a sidewall of a tire, which comprises 15 to 150 phr of silica, wherein two types of silica are used, namely at least 10 phr of silica (1) having an average particle diameter of at least 22 nm and at least 5 phr of silica (2) having an average particle diameter of less than 22 nm.

### SUMMARY OF THE INVENTION

The present invention has its object to provide a rubber composition that solves the above-mentioned problems and can be used for a tread to supply a tire excellent in low heat build-up property and wet grip performance.

The present invention relates to a rubber composition including a rubber component that contains a modified styrene-butadiene rubber in an amount of 5% by weight or more per 100% by weight of the rubber component, the modified styrene-butadiene rubber having, in a main chain thereof, a constitutional unit derived from a nitrogen-containing compound represented by the formula:

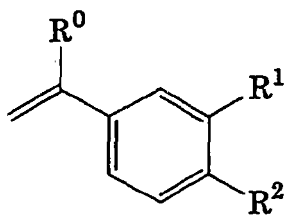

wherein $R^1$ and $R^2$ are each hydrogen, the formula:

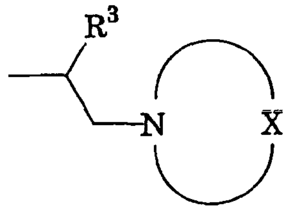

or the formula:

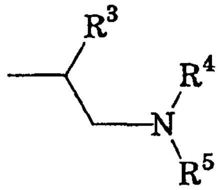

provided that at least one of $R^1$ and $R^2$ is not hydrogen, $R^3$ represents hydrogen or a $C_{1-4}$ hydrocarbon group, X represents a saturated ring-forming part consisting of $(CR^8R^9)_1$, $(CR^{10}R^{11})_m$-$NR^{12}$-$(CR^{13}R^{14})_n$, $(CR^{10}R^{11})_m$-O-$(CR^{13}R^{14})_n$, or $(CR^{10}R^{11})_m$-S-$(CR^{13}R^{14})_n$,
X may be substituted with the formula:

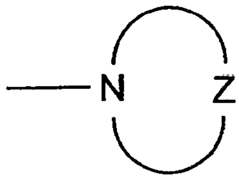

or the formula:

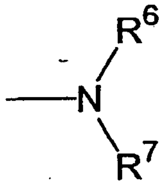

Z represents a saturated ring-forming part consisting of $(CR^8R^9)_1$, $(CR^{10}R^{11})_m$-$NR^{12}$-$(CR^{13}R^{14})_n$, $(CR^{10}R^{11})_m$-O-$(CR^{13}R^{14})_n$, or $(CR^{10}R^{11})_m$-S-$(CR^{13}R^{14})_n$,
$R^4$ to $R^7$ each represent hydrogen, a $C_{1-30}$ aliphatic hydrocarbon group, a $C_{3-30}$ alicyclic hydrocarbon group, a $C_{5-30}$ aromatic hydrocarbon group, or a heterocyclic group containing 3 to 30 annular atoms, and are the same as or different from each other, $R^0$, and $R^8$ to $R^{14}$ each represent hydrogen, a $C_{1-30}$ aliphatic hydrocarbon group, a $C_{3-30}$ alicyclic hydrocarbon group, or a $C_{5-30}$ aromatic hydrocarbon group, and are the same as or different from each other, and 1 represents an integer of 3 to 10, and m and n each represent an integer of 1 to 9; and
the rubber composition further including silica in an amount of 10 to 150 parts by weight per 100 parts by weight of the rubber component, wherein the silica comprises a silica (1) having an average primary particle size of 22 nm or more and a silica (2) having an average primary particle size of less than 22 nm, provided that the average primary particle sizes of the silica (1) and silica (2) satisfy the following equation:

$$\text{(Average primary particle size of Silica (1))/(Average primary particle size of Silica (2))} \geq 1.4,$$

and
wherein 10 parts by weight or more of the silica (1) and 5 parts by weight or more of the silica (2) are contained relative to 100 parts by weight of the rubber component.

The modified styrene-butadiene rubber preferably has at least one terminal further modified with a modifying agent having a functional group that contains at least one atom selected from the group consisting of nitrogen, oxygen and silicon.

The present invention also relates to a tire having a tread prepared using the above-mentioned rubber composition.

The rubber composition of the present invention contains: a modified styrene-butadiene rubber including a

specific nitrogen-containing compound as a monomer unit; and a predetermined amount of silica. By using the rubber composition for a tread, it is possible to provide a tire having both low heat build-up property and good wet grip performance.

BEST MODE FOR CARRYING OUT THE INVENTION

The rubber composition of the present invention includes a rubber component containing
a modified styrene-butadiene rubber (a modified SBR) in an amount of 5% by weight or more per 100% by weight of the rubber component,
the modified styrene-butadiene rubber having, in a main chain thereof, a constitutional unit derived from a nitrogen-containing compound represented by the formula:

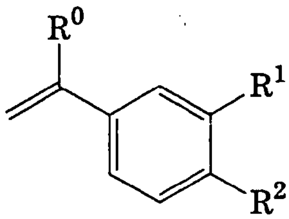

wherein $R^1$ and $R^2$ are each hydrogen, the formula:

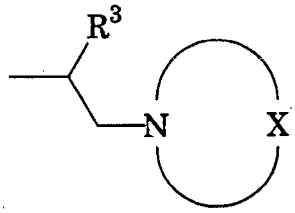

or the formula:

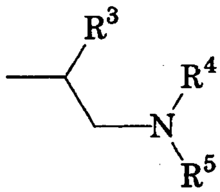

provided that at least one of $R^1$ and $R^2$ is not hydrogen, $R^3$ represents hydrogen or a $C_{1-4}$ hydrocarbon group,
X represents a saturated ring-forming part consisting of $(CR^8R^9)_1$, $(CR^{10}R^{11})_m$-$NR^{12}$-$(CR^{13}R^{14})_n$, $(CR^{10}R^{11})_m$-O-$(CR^{13}R^{14})_n$, or $(CR^{10}R^{11})_m$-S-$(CR^{13}R^{14})_n$,
X may be substituted with the formula:

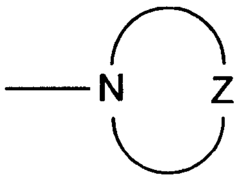

or the formula:

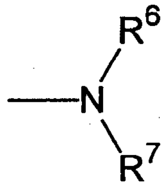

Z represents a saturated ring-forming part consisting of $(CR^8R^9)_1$, $(CR^{10}R^{11})_m$-$NR^{12}$-$(CR^{13}R^{14})_n$, $(CR^{10}R^{11})_m$-O-$(CR^{13}R^{14})_n$, or $(CR^{10}R^{11})_m$-S-$(CR^{13}R^{14})_n$,

$R^4$ to $R^7$ each represent hydrogen, a $C_{1-30}$ aliphatic hydrocarbon group, a $C_{3-30}$ alicyclic hydrocarbon group, a $C_{5-30}$ aromatic hydrocarbon group, or a heterocyclic group containing 3 to 30 annular atoms, and are the same as or different from each other, $R^0$, and $R^8$ to $R^{14}$ each represent hydrogen, a $C_{1-30}$ aliphatic hydrocarbon group, a $C_{3-30}$ alicyclic hydrocarbon group, or a $C_{5-30}$ aromatic hydrocarbon group, and are the same as or different from each other, and 1 represents an integer of 3 to 10, and m and n each represent an integer of 1 to 9; and

the rubber composition further including silica in an amount of 10 to 150 parts by weight per 100 parts by weight of the rubber component, wherein the silica comprises a silica (1) having an average primary particle size of 22 nm or more and a silica (2) having an average primary particle size of less than 22 nm, provided that the average primary particle sizes of the silica (1) and silica (2) satisfy the following equation:

$$(\text{Average primary particle size of Silica (1)})/(\text{Average primary particle size of Silica (2)}) \geq 1.4, \text{ and}$$

wherein 10 parts by weight or more of the silica (1) and 5 parts by weight or more of the silica (2) are contained relative to 100 parts by weight of the rubber component.

When $R^0$, and $R^8$ to $R^{14}$ are each an aliphatic hydrocarbon group, the number of carbon atoms is 1 to 30, and preferably 1 to 5. When $R^0$, and $R^8$ to $R^{14}$ are each an alicyclic hydrocarbon group, the number of carbon atoms is 3 to 30, and preferably 3 to 10. When $R^0$, and $R^8$ to $R^{14}$ are each an aromatic hydrocarbon group, the number of carbon atoms is 5 to 30, and preferably 5 to 10.

Preferably, $R^0$, and $R^8$ to $R^{14}$ are each hydrogen or a $C_{1-2}$ aliphatic hydrocarbon group.

$R^3$ is preferably hydrogen or a $C_{1-2}$ hydrocarbon group.

When $R^4$ to $R^7$ are each an aliphatic hydrocarbon group, the number of carbon atoms is 1 to 30, and preferably 1 to 10. When $R^4$ to $R^7$ are each an alicyclic hydrocarbon group, the number of carbon atoms is 3 to 30, and preferably 3 to 10. When $R^4$ to $R^7$ are each an aromatic hydrocarbon group, the number of carbon atoms is 5 to 30, and preferably 5 to 10. When $R^4$ to $R^7$ are each a heterocyclic group (including an aromatic heterocyclic group), the number of annular atoms is 3 to 30, and preferably 3 to 10.

Preferably, $R^4$ to $R^7$ are each an aliphatic hydrocarbon group, an aromatic hydrocarbon group, or a heterocyclic group, and more preferably an aliphatic hydrocarbon group.

The symbol 1 is an integer of 3 to 10, and preferably an integer of 3 to 7. The symbols m and n are each an integer of 1 to 9, and preferably an integer of 1 to 6.

Since the symbol 1 is an integer of 3 to 10, there is a plurality of $(CR^8R^9)$. The $(CR^8R^9)$ moieties are the same as or different from each other. Similarly, the $(CR^{10}R^{11})$ moieties are the same as or different from each other when the symbol m is an integer of two or more. The $(CR^{13}R^{14})$ moieties are the same as or different from each other when the symbol n is an integer of two or more.

The "saturated ring-forming part" used herein means a part of a saturated ring group. Specifically, in the above formulas, X and N constitute a saturated ring group, and Z and N constitute a saturated ring group.

The modified SBR is a copolymer obtainable by copolymerizing styrene, butadiene (1,3-butadiene), and the nitrogen-containing compound (monomer) represented by the above formula, and has a constitutional unit derived from the nitrogen-containing compound in a main chain portion thereof. The term "main chain portion" used herein includes a terminal portion of polymer.

Unless interfering with the present invention, the modified SBR may be one in which, in addition to the styrene, the butadiene and the nitrogen-containing compound, other conjugated diene compounds and/or aromatic vinyl compounds are used as monomers. Examples of the other conjugated diene compounds include isoprene, 1,3-pentadiene, 2,3-dimethylbutadiene, 2-phenyl-1,3-butadiene, 1,3-hexadiene, and the like. These may be used singly, or two or more of these may be used in combination. Preferred among these is isoprene from the viewpoints of practical utilities such as easy availability of monomers.

Examples of the other aromatic vinyl compounds include $\alpha$-methylstyrene, 1-vinylnaphthalene, 3-vinyltoluene,

ethylvinylbenzene, divinylbenzene, 4-cyclohexylstyrene, 2,4,6-trimethylstyrene, and the like. These may be used singly, or two or more of these may be used in combination.

Examples of the nitrogen-containing compound represented by the above-mentioned formula include: 3- or 4-(2-azetidinoethyl)styrene, 3- or 4-(2-pyrrolidinoethyl)styrene, 3- or 4-(2-piperidinoethyl)styrene, 3- or 4-(2-hexamethyleneiminoethyl)styrene, 3- or 4-(2-heptamethyleneiminoethyl)styrene, 3- or 4-(2-octamethyleneiminoethyl)styrene, 3- or 4-(2-(2,5-dimethylpyrrolidino)ethyl)styrene, 3- or 4-(2-(2-methylpiperidino)ethyl)styrene, 3- or 4-(2-(3-methylpiperidino)ethyl)styrene, 3- or 4-(2-(4-methylpiperidino)ethyl)styrene, 3- or 4-(2-(2-ethylpiperidino)ethyl)styrene, 3- or 4-(2-(4-(1-pyrrolidinyl)piperidino)ethyl)styrene, 3- or 4-(2-(4-piperidinopiperidino)ethyl)styrene, 3- or 4-(2-(2,6-dimethylpiperidino) ethyl)styrene, 3- or 4-(2-(3,3-dimethylpiperidino)ethyl)styrene, 3- or 4-(2-(3,5-dimethylpiperidino)ethyl)styrene, 3- or 4-(2-(2,2,6,6-tetramethylpiperidino)ethyl)styrene, 3- or 4-(2-(4-dimethylamino-2,2,6,6-tetramethylpiperidino)ethyl) styrene, 3- or 4-(2-(1-methylpiperazino)ethyl)styrene, 3- or 4-(2-(1-ethylpiperazino)ethyl)styrene, 3- or 4-(2-(1-methylhomopiperazino)ethyl)styrene, 3- or 4-(2-morpholinoethyl)styrene, 3- or 4-(2-(2,6-dimethylmorpholino)ethyl)styrene, 3- or 4-(2-thiazolidinoethyl)styrene, 3- or 4-(2-thiomorpholinoethyl)styrene, 3- or 4-(2-dimethylaminoethyl)styrene, 3- or 4-(2-(N-ethylmethylamino)ethyl)styrene, 3- or 4-(2-diethylaminoethyl)styrene, 3- or 4-(2-(N-methylpropylamino)ethyl)styrene, 3- or 4-(2-(N-methylisopropylamino)ethyl)styrene, 3- or 4-(2-(N-ethylisopropylamino)ethyl)styrene, 3- or 4-(2-dipropylaminoethyl)styrene, 3- or 4-(2-diisopropylaminoethyl)styrene, 3- or 4-(2-(N-methylbutylamino)ethyl)styrene, 3- or 4-(2-(N-ethylbutylamino)ethyl)styrene, 3- or 4-(2-(N-methyl-tert-butylamino)ethyl)styrene, 3- or 4-(2-(N-tert-butylisopropylamino) ethyl)styrene, 3- or 4-(2-dibutylaminoethyl)styrene, 3- or 4-(2-(di-sec-butyl)aminoethyl)styrene, 3- or 4-(2-diisobutylaminoethyl)styrene, 3- or 4-(2-(tert-amyl-tert-butylamino)ethyl)styrene, 3- or 4-(2-dipentylaminoethyl)styrene, 3- or 4-(2-(N-methylhexylamino)ethyl)styrene, 3- or 4-(2-dihexylaminoethyl)styrene, 3- or 4-(2-(tert-amyl-tert-octylamino)ethyl)styrene, 3- or 4-(2-dioctylaminoethyl)styrene, 3- or 4-(2-bis(2-ethylhexylamino)ethyl)styrene, 3- or 4-(2-didecylaminoethyl) styrene, 3- or 4-(2-(N-methyloctadecylamino)ethyl)styrene, 3- or 4-(2-(N-methylanilino)ethyl)styrene, 3- or 4-(2-diphenylaminoethyl)styrene, 3- or 4-(2-(N-phenylbenzylamino)ethyl)styrene, 3- or 4-(2-(N-phenyl-1-naphthylamino)ethyl)styrene, 3- or 4-(2-(N-phenyl-2-naphthylamino)ethyl)styrene, 3- or 4-(2-(N-benzylmethylamino)ethyl)styrene, 3- or 4-(2-(N-ethylbenzylamino)ethyl)styrene, 3- or 4-(2-(N-isopropylbenzylamino)ethyl)styrene, 3- or 4-(2-(N-butylbenzylamino)ethyl) styrene, 3- or 4-(2-(N-(tert-butyl)benzylamino)ethyl)styrene, 3- or 4-(2-dibenzylaminoethyl)styrene, 3- or 4-(2-(N-methylphenethylamino)ethyl)styrene, 3- or 4-(2-(N-benzyl-2-phenethylamino)ethyl)styrene, 3- or 4-(2-(4-benzylpiperidino) ethyl)styrene, 3- or 4-(2-(1-phenylpiperazino)ethyl)styrene, 3- or 4-(2-(1-benzylpiperazino)ethyl)styrene, 3- or 4-(2-indolinoethyl)styrene, 3- or 4-(2-(2-methylindolino)ethyl)styrene, 3- or 4-(2-(1,2,3,4-tetrahydroquinolino)ethyl)styrene, 3- or 4-(2-(1,2,3,4-tetrahydroisoquinolino)ethyl)styrene, 3- or 4-(2-phenoxazinoethyl)styrene, 3- or 4-(2-phenothiazinoethyl) styrene, 3- or 4-(2-anilinopyridinoethyl)styrene, 3- or 4-(2-(2-benzylaminopyridino)ethyl)styrene, 3- or 4-(2-(2,2'-dipyridylamino)ethyl)styrene, 3- or 4-(2-(2-methylamino)pyridinoethyl)styrene, 3- or 4-(2-(1-(2-pyridyl)piperazino)ethyl)styrene, 3- or 4-(2-(2-(2-methylaminoethyl)pyridino)ethyl)styrene, 3- or 4-(2-(4-(ethylaminomethyl)pyridino)ethyl) styrene, 3- or 4-(2-(4-(ethylaminomethyl)pyridino)ethyl)styrene, and the like. These may be used singly, or two or more of these may be used in combination.

The modified SBR to be used in the present invention can be produced by copolymerizing the nitrogen-containing compound, styrene and butadiene, and if necessary, other conjugated diene compounds and/or aromatic vinyl compounds. The polymerization is not particularly limited, and any one of solution polymerization, gas phase polymerization, and bulk polymerization can be used. The solution polymerization is particularly preferable in terms of the design flexibility of polymers, processability, and the like. The polymerization may be performed by either a batch system or a continuous system. According to the solution polymerization, the desired modified SBR can be produced by, for example, anionically polymerizing the nitrogen-containing compound with styrene, butadiene, and if necessary, other conjugated diene compounds and/or aromatic vinyl compounds with use of a lithium compound as a polymerization initiator.

Upon using the solution polymerization, the monomer concentration in solution is preferably 5% by mass or more, and more preferably 10% by mass or more. When the monomer concentration in solution is less than 5% by mass, the amount of polymer obtained tends to become small, likely leading to cost increase. The monomer concentration in solution is preferably 50% by mass or less, and more preferably 30% by mass or less. When the monomer concentration in solution exceeds 50% by mass, the solution viscosity is so high that stirring may be difficult, resulting in a tendency toward difficulty in polymerization.

In the case of anionic polymerization, the polymerization initiator is not particularly limited, and organolithium compounds are preferably used. The organolithium compounds preferably have a $C_{2-20}$ alkyl group. Examples thereof include: ethyllithium, n-propyllithium, isopropyllithium, n-butyllithium, sec-butyllithium, tert-butyllithium, tert-octyllithium, n-decyllithium, phenyllithium, 2-naphthyllithium, 2-butyl-phenyllithium, 4-phenyl-butyllithium, cyclohexyllithium, cyclopentyllithium, a reaction product of diisopropenylbenzene and butyllithium, and the like. Preferred among these are n-butyllithium and sec-butyllithium from the viewpoints of easy availability, safety, and the like.

The method for producing a polymer by anionic polymerization using the organolithium compound as a polymerization initiator is not particularly limited, and conventionally known methods can be used.

Specifically, the desired modified SBR can be obtained by anionically polymerizing the nitrogen-containing

compound represented by the above formula with styrene, butadiene, and if necessary, other conjugated diene compounds and/or aromatic vinyl compounds in an organic solvent inert to the reaction, for example, a hydrocarbon solvent such as an aliphatic, alicyclic, or aromatic hydrocarbon compound, with use of the above lithium compound as a polymerization initiator, and if necessary, in the presence of a randomizer.

$C_{3-8}$ hydrocarbon solvents are preferable as the hydrocarbon solvent. Examples thereof include: propane, n-butane, isobutane, n-pentane, isopentane, n-hexane, cyclohexane, propene, 1-butene, isobutene, trans-2-butene, cis-2-butene, 1-pentene, 2-pentene, 1-hexene, 2-hexene, benzene, toluene, xylene, ethylbenzene, and the like. These may be used singly, or two or more of these may be used in admixture.

The term "randomizer" used herein means a compound having a function of controlling the microstructure of conjugated diene portion in a polymer, for example, increase of 1,2-bond in butadiene portion, or increase of 3,4-bond in isoprene portion, or a function of controlling the compositional distribution of each monomer units in a polymer, for example, randomization of butadiene unit and styrene unit in a butadiene-styrene copolymer. The randomizer is not particularly limited, and any of publicly known compounds that are generally used as a randomizer can be used. Examples thereof include ethers and tertiary amines, such as dimethoxybenzene, tetrahydrofuran, dimethoxyethane, diethylene glycol dibutyl ether, diethylene glycol dimethyl ether, bistetrahydrofuryl propane, triethylamine, pyridine, N-methylmorpholine, N,N,N',N'-tetramethylethylenediamine, and 1,2-dipiperidinoethane. Potassium salts, such as potassium-t-amylate, and potassium-t-butoxide, and sodium salts, such as sodium-t-amylate, can be also used. These randomizers may be used singly, or two or more of these may be used in combination. The randomizer is preferably used in an amount of 0.01 molar equivalents or more, and more preferably 0.05 molar equivalents or more, per mole of the organolithium compound. When the randomizer is used in an amount of less than 0.01 molar equivalents, effects of adding it tend to become small, likely resulting in difficulty in randomization. The randomizer is preferably used in an amount of 1000 molar equivalents or less, and more preferably 500 molar equivalents or less, per mole of the organolithium compound. When the randomizer is used in an amount of more than 1000 molar equivalents, the reaction rate of monomers tends to greatly change, likely resulting in difficulty in randomization on the contrary.

The modified SBR is preferably a copolymer in which at least one terminal thereof is modified with a modifying agent having a functional group that contains at least one atom selected from the group consisting of nitrogen, oxygen and silicon. Examples of the functional group containing at least one atom selected from the group consisting of nitrogen, oxygen and silicon include: an amino group, an amide group, an alkoxysilyl group, an isocyanato group, an imino group, an imidazole group, an urea group, an ether group, a carbonyl group, a carboxyl group, a hydroxyl group, a nitrile group, a pyridyl group, and the like. Examples of the modifying agent include: 3-glycidoxypropyltrimethoxysilane, (3-triethoxysilylpropyl)tetrasulfide, 1-(4-N,N-dimethylaminophenyl)-1-phenylethylene, 1,1-dimethoxytrimethylamine, 1,2-bis(trichlorosilyl)ethane, 1,3,5-tris(3-triethoxysilylpropyl)isocyanurate, 1,3,5-tris(3-trimethoxysilylpropyl)isocyanurate, 1,3-dimethyl-2-imidazolidinone, 1,3-propanediamine, 1,4-diaminobutane, 1-[3-(triethoxysilyl)propyl]-4,5-dihydroimidazole, 1-glycidyl-4-(2-pyridyl)piperazine, 1-glycidyl-4-phenylpiperazine, 1-glycidyl-4-methylpiperazine, 1-glycidyl-4-methylhomopiperazine, 1-glycidylhexamethyleneimine, 11-aminoundecyltriethoxysilane, 11-aminoundecyltrimethoxysilane, 1-benzyl-4-glycidylpiperazine, 2-(3,4-epoxycyclohexyl)ethyltrimethoxysilane, 2-(4-morpholinodithio)benzothiazole, 2-(6-aminoethyl)-3-aminopropyltrimethoxysilane, 2-(triethoxysilylethyl)pyridine, 2-(trimethoxysilylethyl)pyridine, 2-(2-pyridylethyl)thiopropyltrimethoxysilane, 2-(4-pyridylethyl)thiopropyltrimethoxysilane, 2,2-diethoxy-1,6-diaza-2-silacyclooctane, 2,2-dimethoxy-1,6-diaza-2-silacyclooctane, 2,3-dichloro-1,4-naphthoquinone, 2,4-dinitrobenzenesulfonyl chloride, 2,4-tolylene diisocyanate, 2-(4-pyridylethyl)triethoxysilane, 2-(4-pyridylethyl)trimethoxysilane, 2-cyanoethyltriethoxysilane, 2-tributylstannyl-1,3-butadiene, 2-(trimethoxysilylethyl)pyridine, 2-vinylpyridine, 2-(4-pyridylethyl)triethoxysilane, 2-(4-pyridylethyl)trimethoxysilane, 2-laurylthioethylphenyl ketone, 3-(1-hexamethyleneimino)propyl(triethoxy)silane, 3-(1,3-dimethylbutylidene)aminopropyltriethoxysilane, 3-(1,3-dimethylbutylidene)aminopropyltrimethoxysilane, 3-(2-aminoethylaminopropyl)trimethoxysilane, 3-(m-aminophenoxy)propyltrimethoxysilane, 3-(N,N-dimethylamino)propyltriethoxysilane, 3-(N,N-dimethylamino)propyltrimethoxysilane, 3-(N-methylamino)propyltriethoxysilane, 3-(N-methylamino)propyltrimethoxysilane, 3-(N-allylamino)propyltrimethoxysilane, 3,4-diaminobenzoic acid, 3-aminopropyldimethylethoxysilane, 3-aminopropyltriethoxysilane, 3-aminopropyltrimethoxysilane, 3-aminopropyl tris(methoxydiethoxy)silane, 3-aminopropyldiisopropylethoxysilane, 3-isocyanatepropyltriethoxysilane, 3-glycidoxypropyltriethoxysilane, 3-glycidoxypropyltrimethoxysilane, 3-glycidoxypropylmethyldimethoxysilane, 3-diethylaminopropyltrimethoxysilane, 3-diethoxy(methyl)silylpropyl succinic anhydride, 3-(N,N-diethylaminopropyl)triethoxysilane, 3-(N,N-diethylaminopropyl)trimethoxysilane, 3-(N,N-dimethylaminopropyl)diethoxymethylsilane, 3-(N,N-dimethylaminopropyl)triethoxysilane, 3-(N,N-dimethylaminopropyl)trimethoxysilane, 3-triethoxysilylpropyl succinic anhydride, 3-triethoxysilylpropyl acetic anhydride, 3-triphenoxysilylpropyl succinic anhydride, 3-triphenoxysilylpropyl acetic anhydride, 3-trimethoxysilylpropyl benzothiazole tetrasulfide, 3-hexamethyleneiminopropyltriethoxysilane, 3-mercaptopropyltrimethoxysilane, (3-triethoxysilylpropyl)diethylenetriamine, (3-trimethoxysilylpropyl)diethylenetriamine, 4,4'-bis(diethylamino)benzophenone, 4,4'-bis(dimethylamino)benzophenone, 4'-(imidazol-1-yl)-acetophenone, 4-[3-(N,N-diglycidylamino)propyl]morpholine, 4-glycidyl-2,2,6,6-tetramethylpiperidinyloxy, 4-aminobutyltriethoxysilane, 4-vinylpyridine, 4-morpholinoacetophenone, 4-morpholinobenzophenone, m-aminophenyltrimethoxysilane, N-(1,3-dimethylbutylidene)-3-(triethoxysilyl)-1-propaneamine,

N-(1,3-dimethylbutylidene)-3-(trimethoxysilyl)-1-propaneamine, N-(1-methylethylidene)-3-(triethoxysilyl)-1-propaneamine, N-(2-aminoethyl)-3-aminopropylmethyldiethoxysilane, N-(2-aminoethyl)-3-aminopropylmethyldimethoxysilane, N-(2-aminoethyl)-3-aminopropyltriethoxysilane, N-(2-aminoethyl)-3-aminopropyltrimethoxysilane, N-(2-aminoethyl)-11-aminoundecyltriethoxysilane, N-(2-aminoethyl)-11-aminoundecyltrimethoxysilane, N-(2-aminoethyl)-3-aminoisobutylmethyldiethoxysilane, N-(2-aminoethyl)-3-aminoisobutylmethyldimethoxysilane, N-(3-diethoxymethylsilylpropyl)succinimide, N-(3-triethoxysilylpropyl)-4,5-dihydroimidazole, N-(3-triethoxysilylpropyl)pyrrole, N-(3-trimethoxysilylpropyl)pyrrole, N-3-[amino(polypropyleneoxy)]aminopropyltrimethoxysilane, N-[5-(triethoxysilyl)-2-aza-1-oxopentyl]caprolactam, N-[5-(trimethoxysilyl)-2-aza-1-oxopentyl]caprolactam, N-(6-aminohexyl)aminomethyltriethoxysilane, N-(6-aminohexyl) aminomethyltrimethoxysilane, N-allyl-aza-2,2-diethoxysilacyclopentane, N-allyl-aza-2,2-dimethoxysilacyclopentane, N-(cyclohexylthio)phthalimide, N-n-butyl-aza-2,2-diethoxysilacyclopentane, N-n-butyl-aza-2,2-dimethoxysilacyclopentane, N,N,N',N'-tetraethylaminobenzophenone, N,N,N',N'-tetramethylthiourea, N,N,N',N'-tetramethylurea, N,N'-ethyleneurea, N,N'-diethylaminobenzophenone, N,N'-diethylaminobenzophenone, N,N'-diethylaminobenzofuran, methyl N, N'-diethylcarbamate, N,N'-diethylurea, (N,N-diethyl-3-aminopropyl)triethoxysilane, (N,N-diethyl-3-aminopropyl)trimethoxysilane, N,N-dioctyl-N'-triethoxysilylpropylurea, N,N-dioctyl-N'-trimethoxysilylpropylurea, methyl N,N-diethylcarbamate, N,N-diglycidylcyclohexylamine, N,N-dimethyl-o-toluidine, N,N-dimethylaminostyrene, N,N-diethylaminopropylacrylamide, N,N-dimethylaminopropylacrylamide, N-ethylaminoisobutyltriethoxysilane, N-ethylaminoisobutyltrimethoxysilane, N-ethylaminoisobutylmethyldiethoxysilane, N-oxydiethylene-2-benzothiazole sulfenamide, N-cyclohexylaminopropyltriethoxysilane, N-cyclohexylaminopropyltrimethoxysilane, N-methylaminopropylmethyldimethoxysilane, N-methylaminopropylmethyldiethoxysilane, N-vinylbenzyl azacycloheptane, N-phenylpyrrolidone, N-phenylaminopropyltriethoxysilane, N-phenylaminopropyltrimethoxysilane, N-phenylaminomethyltriethoxysilane, N-phenylaminomethyltrimethoxysilane, n-butylaminopropyltriethoxysilane, n-butylaminopropyltrimethoxysilane, N-methylaminopropyltriethoxysilane, N-methylaminopropyltrimethoxysilane, N-methyl-2-piperidone, N-methyl-2-pyrrolidone, N-methyl-E-caprolactam, N-methylindolinone, N-methylpyrrolidone, p-(2-dimethylaminoethyl)styrene, p-aminophenyltrimethoxysilane, γ-glycidoxypropyltrimethoxysilane, γ-methacryloxypropyltrimethoxysilane, (aminoethylamino)-3-isobutyldiethoxysilane, (aminoethylamino)-3-isobutyldimethoxysilane, (aminoethylaminomethyl)phenethyltriethoxysilane, (aminoethylaminomethyl)phenethyltrimethoxysilane, acrylic acid, diethyl adipate, acetamidopropyltrimethoxysilane, aminophenyltrimethoxysilane, aminobenzophenone, ureidopropyltriethoxysilane, ureidopropyltrimethoxysilane, ethylene oxide, octadecyldimethyl(3-trimethoxysilylpropyl)ammonium chloride, glycidoxypropyltriethoxysilane, glycidoxypropyltrimethoxysilane, glycerol tristearate, chlorotriethoxysilane, chloropropyltriethoxysilane, chloropolydimethylsiloxane, chloromethyldiphenoxysilane, diallyldiphenyltin, diethylaminomethyltriethoxysilane, diethylaminomethyltrimethoxysilane, diethyl(glycidyl)amine, diethyldithiocarbamic acid 2-benzothiazolyl ester, diethoxydichlorosilane, (cyclohexylaminomethyl)triethoxysilane, (cyclohexylaminomethyl)trimethoxysilane, diglycidyl polysiloxane, dichlorodiphenoxysilane, dicyclohexylcarbodiimide, divinylbenzene, diphenylcarbodiimide, diphenylcyanamide, diphenylmethane diisocyanate, diphenoxymethylchlorosilane, dibutyldichlorotin, dimethyl(acetoxy-methylsiloxane)polydimethylsiloxane, dimethylaminomethyltriethoxysilane, dimethylaminomethyltrimethoxysilane, dimethyl(methoxy-methylsiloxane)polydimethylsiloxane, dimethylimidazolidinone, dimethylethyleneurea, dimethyldichlorosilane, dimethylsulfomoyl chloride, silsesquioxane, sorbitan trioleate, sorbitan monolaurate, titanium tetrakis(2-ethylhexyoxide), tetraethoxysilane, tetraglycidyl-1,3-bisaminomethylcyclohexane, tetraphenoxysilane, tetramethylthiuram disulfide, tetramethoxysilane, triethoxyvinylsilane, tris(3-trimethoxysilylpropyl)cyanurate, triphenylphosphate, triphenoxychlorosilane, triphenoxymethylsilicon, triphenoxymethylsilane, carbon dioxide, bis(triethoxysilylpropyl)amine, bis(trimethoxysilylpropyl) amine, bis[3-(triethoxysilyl)propyl]ethylenediamine, bis[3-(trimethoxysilyl)propyl]ethylenediamine, bis[3-(triethoxysilyl)propyl]urea, bis[(trimethoxysilyl)propyl]urea, bis(2-hydroxymethyl)-3-aminopropyltriethoxysilane, bis(2-hydroxymethyl)-3-aminopropyltrimethoxysilane, bis(2-ethylhexanoate)tin, bis(2-methylbutoxy)methylchlorosilane, bis(3-triethoxysilylpropyl)tetrasulfide, bisdiethylaminobenzophenone, bisphenol A diglycidyl ether, bisphenoxyethanol fluorene diglycidyl ether, bis(methyldiethoxysilylpropyl)amine, bis(methyldimethoxysilylpropyl)-N-methylamine, hydroxymethyltriethoxysilane, vinyltris(2-ethylhexyloxy)silane, vinylbenzyldiethylamine, vinylbenzyldimethylamine, vinylbenzyltributyltin, vinylbenzylpiperidine, vinylbenzylpyrrolidine, pyrrolidine, phenyl isocyanate, phenyl isothiocyanate, (phenylaminomethyl)methyldimethoxysilane, (phenylaminomethyl)methyldiethoxysilane, phthalic acid amide, hexamethylene diisocyanate, benzylideneaniline, polydiphenylmethane diisocyanate, polydimethylsiloxane, methyl-4-pyridyl ketone, methylcaprolactam, methyltriethoxysilane, methyltriphenoxysilane, methyl laurylthiopropionate, silicon tetrachloride, and the like. In terms of performance improvement, preferred among these are 3-(N,N-dimethylamino)propyltrimethoxysilane, 3-(N,N-diethylaminopropyl)trimethoxysilane, 3-(N,N-dimethylamino)propyltriethoxysilane, 3-(N,N-diethylaminopropyl)triethoxysilane, 3-glycidoxypropyltrimethoxysilane, 2-(4-pyridylethyl)triethoxysilane, N-(3-triethoxysilylpropyl)-4,5-dihydroimidazole, silicon tetrachloride, and the like.

Modification of the modified SBR at its terminal (s) with the modifying agent can be performed by reacting 0.01 to 10 parts by weight of the modifying agent with 100 parts by weight of the modified SBR so as to, for example in the case of the modified SBR obtained by anionic polymerization, react a functional group of the modifying agent with a terminal anion in the modified SBR. At least one terminal of the modified SBR is preferably modified, and both terminals

thereof are more preferably modified.

In the present invention, at the end of this reaction, publicly known antioxidants, and/or alcohols and the like for stopping polymerization reaction, may be added if necessary.

The amount of the nitrogen-containing compound in the modified SBR is preferably 0.05 to 30% by weight. More preferably, the lower limit thereof is 0.1% by weight, and the upper limit thereof is 20% by weight. When the amount of the nitrogen-containing compound is less than 0. 05% by weight, fuel economy and wet grip performance tend not to be improved. The amount exceeding 30% by weight tends to increase cost.

The weight-average molecular weight (Mw) of the modified SBR is preferably $1.0 \times 10^5$ to $2.0 \times 10^6$. More preferably, the lower limit thereof is $2.0 \times 10^5$, and the upper limit thereof is $1.5 \times 10^6$. When the weight-average molecular weight is less than $1.0 \times 10^5$, hysteresis loss may be so large that fuel consumption is not sufficiently reduced; also, abrasion resistance tends to be lowered. When it exceeds $2.0 \times 10^6$, processability tends to decrease.

In the present invention, in addition to the modified SBR, diene rubbers are preferably used as the rubber component of the rubber composition. The diene rubbers comprise natural rubbers and/or diene type synthetic rubbers, and examples of the diene type synthetic rubbers include: isoprene rubber (IR), butadiene rubber (BR), styrene-butadiene rubber (SBR), acrylonitrile-butadiene rubber (NBR), chloroprene rubber (CR), isobutylene-isoprene rubber (IIR), and the like. NR, BR and SBR are preferred among these because of their favorable balance between grip performance and abrasion resistance. These rubbers may be used singly, or two or more of these may be used in combination.

The amount of the modified SBR is 5% by weight or more, preferably 10% by weight or more, and more preferably 20% by weight or more, per 100% by weight of the rubber component. When the amount thereof is less than 5% by weight, fuel economy may not be improved. The upper limit thereof is not particularly limited, and the amount thereof is preferably 90% by weight or less, more preferably 80% by weight or less, and further preferably 75% by weight or less. The amount exceeding 90% by weight tends to extremely deteriorate breaking strength.

Silica is blended as a reinforcing agent in the rubber composition of the present invention. The silica is not particularly limited, and examples thereof include dry silica (silicic anhydride), wet silica (hydrous silicic acid), and the like. The wet silica is preferable because it has more silanol groups.

The amount of silica (the total amount in the case of using two or more kinds of silica) is 10 parts by weight or more, and preferably 20 parts by weight or more, per 100 parts by weight of the rubber component. When the amount of silica is less than 10 parts by weight, effects of blending silica cannot be sufficiently exerted. The amount of silica is 150 parts by weight or less, and preferably 120 parts by weight or less, per 100 parts by weight of the rubber component. The amount of silica exceeding 150 parts by weight makes it difficult to disperse silica in the rubber component, resulting in poor rubber processability.

According to the present invention, two or more kinds of silica are blended, wherein the silica comprises a silica (1) having an average primary particle size of 22 nm or more and a silica (2) having an average primary particle size of less than 22 nm, provided that the average primary particle sizes of the silica (1) and silica (2) satisfy the following equation:

$$\text{(Average primary particle size of Silica (1))/(Average primary particle size of Silica (2))} \geq 1.4.$$

By using these kinds of silica in combination, dispersibility of silica is improved, leading to improvement in fuel economy. The average primary particle size of the silica (1) is preferably twice or more as large as the average primary particle size of the silica (2). When it is less than 1.4 times as large, the difference between the average primary particle sizes of two kinds of silica is smaller, the effects of blending two kinds of silica tend not to be exerted.

The amount of the silica (1) is 10% by weight or more, and preferably 15% by weight or more, per 100% by weight of the total silica. When the amount of the silica (1) is less than 10% by weight, rolling resistance tends not to be sufficiently reduced. The amount of the silica (1) is preferably 45% by weight or less, and more preferably 40% by weight or less. When the amount of the silica (1) exceeds 45% by weight, breaking strength tends to be greatly reduced.

The amounts of the silica (1) and silica (2) preferably satisfy the following equation:

$$\text{(Amount of Silica (1))} \times 0.03 \leq \text{(Amount of Silica (2))} \leq \text{(Amount of Silica (1))} \times 14.$$

The amount of the silica (2) is more preferably 0.15 or more times, further preferably 0.25 or more times as much as the amount of the silica (1). The amount of the silica (2) is more preferably 7 or less times, further preferably 4 or less times as much as the amount of the silica (1). When the amount of the silica (2) is less than 0.03 times as much as the amount of the silica (1), handling stability tends to be reduced. The amount thereof exceeding 14 times tends to increase rolling

resistance. According to the present invention, the amount of the silica (1) is 10 parts by weight or more, and the amount of the silica (2) is 5 parts by weight or more, per 100 parts by weight of the rubber component.

The average primary particle size of silica in the present invention refers to the average of values obtained by observing the minimum particle unit of silica forming an agglomeration structure, which is regarded as a circle, and measuring the absolute maximum length of the minimum particle as a diameter of circle. The average primary particle size of silica may be determined, for example, as follows: measuring the diameter of 100 primary particles of silica with a transmission electron microscope H-7100 produced by Hitachi, Ltd.; and averaging the diameters of 100 primary particles.

The rubber composition of the present invention preferably contains a silane coupling agent in combination with silica such as the silica (1) and silica (2).

Any silane coupling agent conventionally used in combination with silica can be used as a silane coupling agent suitably used in the present invention. Examples thereof include: sulfide-type silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(4-trimethoxysilylbutyl)tetrasulfide, bis(3-triethoxysilylpropyl)trisulfide, bis(2-triethoxysilylethyl)trisulfide, bis(4-triethoxysilylbutyl)trisulfide, bis(3-trimethoxysilylpropyl)trisulfide, bis(2-trimethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 2-trimethoxysilylethyl-N,N-dimethylthiocarbamoyl tetrasulfide, 3-trimethoxysilylpropylbenzothiazolyl tetrasulfide, 3-triethoxysilylpropylbenzothiazole tetrasulfide, 3-triethoxysilylpropylmethacrylate monosulfide, and 3-trimethoxysilylpropylmethacrylate monosulfide; mercapto-type silane coupling agents such as 3-mercaptopropyltrimethoxysilane, 3-mercaptopropyltriethoxysilane, 2-mercaptoethyltrimethoxysilane, and 2-mercaptoethyltriethoxysilane; vinyl-type silane coupling agents such as vinyltriethoxysilane and vinyltrimetoxysilane; amino-type silane coupling agents such as 3-aminopropyltriethoxysilane, 3-aminopropyltrimethoxysilane, 3-(2-aminoethyl)aminopropyltriethoxysilane, and 3-(2-aminoethyl)aminopropyltrimethoxysilane; glycidoxy-type silane coupling agents such as $\gamma$-glycidoxypropyltriethoxysilane, $\gamma$-glycidoxypropyltrimetoxysilane, $\gamma$-glycidoxypropylmethyldietoxysilane, and $\gamma$-glycidoxypropylmethyldimethoxysilane; nitro-type silane coupling agents such as 3-nitropropyltrimethoxysilane and 3-nitropropyltriethoxysilane; chloro-type silane coupling agents such as 3-chloropropyltrimetoxysilane, 3-chloropropyltriethoxysilane, 2-chloroethyltrimethoxysilane, and 2-chloroethyltriethoxysilane; and the like. Examples of trade names thereof include: Si69, Si75 and Si363 (each produced by Degussa AG) ; NXT, NXT-LV, NXT-ULV, and NXT-Z (each produced by Momentive Performance Materials Inc.); and the like.

The amount of the silane coupling agent is preferably 3 parts by weight or more, and more preferably 8 parts by weight or more, per 100 parts by weight of the total silica. When the amount of the silane coupling agent is less than 3 parts by weight, breaking strength tends to decrease significantly. The amount of the silane coupling agent is preferably 15 parts by weight or less, and more preferably 10 parts by weight or less, per 100 parts by weight of the total silica. When the amount of the silane coupling agent exceeds 15 parts by weight, the effects of adding a silane coupling agent, such as increase in breaking strength and decrease in rolling resistance, tend not to be exerted.

In addition to the rubber component, the silica and the silane coupling agent, the rubber composition of the present invention may optionally contain compounding ingredients commonly used in production of rubber compositions, in a commonly used amount. Examples of the compounding ingredients include: reinforcing fillers such as carbon black and clay, antioxidants, zinc oxide, stearic acid, aromatic oil, waxes, vulcanizing agents such as sulfur, and vulcanization accelerators, and the like.

When the rubber composition of the present invention contains carbon black, the nitrogen adsorption specific surface area ($N_2SA$) of carbon black is preferably 30 $m^2/g$ or more, and more preferably 40 $m^2/g$ or more. When the $N_2SA$ is less than 30 $m^2/g$, rubber reinforcement and abrasion resistance tend to be insufficient. The $N_2SA$ of carbon black is preferably 100 $m^2/g$ or less, and more preferably 90 $m^2/g$ or less. When the $N_2SA$ exceeds 100 $m^2/g$, dispersibility of carbon black tends to be poor, likely resulting in high heat build-up. Examples of the carbon black include HAF, FEF and the like.

The amount of carbon black is preferably 2 parts by weight or more, and more preferably 5 parts by weight or more, per 100 parts by weight of the rubber component. The amount thereof is preferably 20 parts by weight or less, and more preferably 15 parts by weight or less, per 100 parts by weight of the rubber component. The amount of less than 2 parts by weight tends to deteriorate processability. On the other hand, when the amount exceeds 20 parts by weight, wet grip performance and low heat build-up property tend to be poor.

Commonly known methods can be employed as the method for producing the rubber composition of the present invention, and for example, the rubber composition can be produced by mixing the respective ingredients mentioned above with use of a rubber kneader such as a Banbury mixer or an open roll mill.

The rubber composition is applicable to a tread. The tread can be prepared by, for example, laminating sheets

of the rubber composition with each other into a predetermined shape, or inserting the rubber composition into two or more extruders to form a two-layer sheet at the head exit of the extruders.

The present invention also relates to a tire having a tread prepared using the rubber composition of the present invention, and the tire may be produced by a usual method with use of the rubber composition. More specifically, the rubber composition of the present invention prepared by blending the aforementioned chemical agents according to necessity is extruded and processed into a shape of tread at an unvulcanized stage and then assembled with other tire components in a usual manner on a tire building machine to obtain an unvulcanized tire. Then, the unvulcanized tire is subjected to heating and pressing in a vulcanizer to obtain the tire of the present invention. The thus-obtained tire of the present invention is excellent in low heat build-up property and wet grip performance.

EXAMPLES

The present invention will be specifically described according to examples, and is not intended to be limited only by these examples.

In the following, respective chemical agents used for the synthesis of Monomer (1) are listed.

Cyclohexane: cyclohexane (produced by Kanto Chemical Co., Inc.)
Pyrrolidine: pyrrolidine (produced by Kanto Chemical Co., Inc.)
Divinylbenzene: divinylbenzene (produced by Sigma-Aldrich Japan K.K.)
1. 6 M n-Butyl lithium in hexane: 1.6 M solution of n-butyl lithium in hexane (produced by Kanto Chemical Co., Inc.)
Isopropanol: isopropanol (produced by Kanto Chemical Co., Inc.)

Production Example 1 (synthesis of Monomer (1))

To a 100 ml container in which the air therein was sufficiently substituted with nitrogen were added 50 ml of cyclohexane, 4.1 ml (3.6 g) of pyrrolidine, and 6.5 g of divinylbenzene. Thereto was further added 0.7 ml of 1.6 M n-butyl lithium in hexane at 0°C, and the mixture was stirred. After 1 hour, isopropanol was added to the mixture to stop the reaction, and then extraction and purification were performed to give Monomer (1).

In the following, respective chemical agents used for the synthesis of Polymers (1) and (2) are listed.

Cyclohexane: cyclohexane (produced by Kanto Chemical Co., Inc.)
Styrene: styrene (produced by Kanto Chemical Co., Inc.)
Butadiene: 1,3-butadiene (produced by Takachiho Chemical Industrial Co., Ltd.)
Tetramethylethylenediamine: N,N,N',N'-tetramethylethylenediamine (produced by Kanto Chemical Co., Inc.)
1.6 M n-Butyl lithium in hexane: 1.6 M solution of n-butyl lithium in hexane (produced by Kanto Chemical Co., Inc.)
Terminal-modifying agent: 3-(N,N-dimethylaminopropyl)trimethoxysilane (produced by AZmax Co., Ltd.)
Isopropanol: isopropanol (produced by Kanto Chemical Co., Inc.)

Production Example 2 (synthesis of Polymer (1))

To a 1000 ml pressure-resistant container in which the air therein was sufficiently substituted with nitrogen were added 600 ml of cyclohexane, 12.6 ml (11.4 g) of styrene, 71.0 ml (41.0 g) of butadiene, 0.29 g of Monomer (1), and 0.11 ml of tetramethylethylenediamine. Thereto was further added 0.2 ml of 1.6 M n-butyl lithium in hexane at 40°C, and the mixture was stirred. After 3 hours, 3 ml of isopropanol was added to the mixture to stop the polymerization. After adding 1 g of 2, 6-tert-butyl-p-cresol to the reaction solution, the solution was subjected to a reprecipitation treatment with methanol, and heated and dried to give Polymer (1).

Production Example 3 (synthesis of Polymer (2))

To a 1000 ml pressure-resistant container in which the air therein was sufficiently substituted with nitrogen were added 600 ml of cyclohexane, 12.6 ml (11.4 g) of styrene, 71.0 ml (41.0g) of butadiene, 0.29 g of Monomer (1), and 0.11 ml of tetramethylethylenediamine. Thereto was further added 0.2 ml of 1.6 M n-butyl lithium in hexane at 40°C, and the mixture was stirred. After 3 hours, 0.5 ml (0.49 g) of 3-(N,N-dimethylaminopropyl)trimethoxysilane (a modifying agent) was added to the mixture and stirred. After 1 hour, 3 ml of isopropanol was added to the mixture to stop the polymerization. After adding 1 g of 2,6-tert-butyl-p-cresol to the reaction solution, the solution was subjected to a reprecipitation treatment with methanol, and heated and dried to give Polymer (2).

(Measurement of weight-average molecular weight (Mw))

The weight-average molecular weight (Mw) was measured using an apparatus of GPC-8000 series produced by TOSOH CORPORATION with a differential refractometer as a detector, and the molecular weight was calibrated relative to polystyrene standards.

(Measurement of amount of nitrogen-containing compound monomer in polymer)

The amount of nitrogen-containing compound monomer in a polymer was measured using an apparatus of JNM-ECA series available from JEOL Ltd.

Examples 1 to 10 and Comparative Examples 1 to 3

In the following, respective chemical agents used in Examples and Comparative Examples are listed.

Styrene-butadiene rubber (SBR): E15 (produced by Asahi Kasei Chemicals Corporation)
Polymer (1): main chain-modified SBR (produced in Production Example 2, Mw: $3.0 \times 10^5$, amount of nitrogen-containing compound monomer: 1.0% by weight)
Polymer (2): main chain- and terminal-modified SBR (produced in Production Example 3, Mw: $3.0 \times 10^5$, amount of nitrogen-containing compound monomer: 1.0% by weight)
NR: RSS#3
Carbon black: SEAST NH (produced by Tokai Carbon Co., Ltd., $N_2SA$: 74 $m^2/g$)
Silica (1) : ULTRASIL 360 (produced by Degussa AG, average primary particle size: 28 nm)
Silica (2) : ULTRASIL VN3 (produced by Degussa AG, average primary particle size: 15 nm)
Silane coupling agent: Si75 (produced by Degussa AG, bis(3-triethoxysilylpropyl)disulfide)
Zinc oxide: zinc white No. 1 (produced by Mitsui Mining & Smelting Co., Ltd.)
Stearic acid: stearic acid "Tsubaki" (produced by NOF Corporation)
Antioxidant: Antigene 6C (produced by Sumitomo Chemical Co., Ltd., N-(1,3-dimethylbutyl)-N'-phenyl-p-phenylenediamine)
Wax: SUNNOC N (produced by Ouchi Shinko Chemical Industrial Co., Ltd.)
Aromatic oil: Process X-140 (produced by Japan Energy Corporation)
Sulfur: sulfur powder (produced by Karuizawa Iou K.K.)
Vulcanization accelerator (1) : Nocceler CZ (produced by Ouchi Shinko Chemical Industrial Co., Ltd., N-cyclohexyl-2-benzothiazolylsulfenamide)
Vulcanization accelerator (2): Nocceler D (produced by Ouchi Shinko Chemical Industrial Co., Ltd., N,N'-diphenylguanidine)

According to the blending formulations shown in Table 1, the chemical agents were mixed to give the respective rubber compositions. Test tires (size: 195/65R15) were produced using each of these rubber compositions for a tread of tire, and were subjected to the following tests.

(Rolling performance)

Using a rolling resistance tester, rolling resistance of a test tire was determined under the conditions of: a rim of $15 \times 6JJ$, an internal pressure of 230 kPa, a load of 3.43 kN, and a speed of 80 km/h, and the result was expressed as an index based on the value of Comparative Example 1, which was regarded as 100. The larger index value means the better rolling performance. The index was calculated by the following equation.

$$\text{(Rolling performance)} = \text{(Rolling resistance of Comparative Example 1)}/\text{(Rolling resistance of each of Examples and Comparative Examples)} \times 100$$

(Wet grip performance)

The braking distance from an initial braking speed of 100 km/h was measured on a wet asphalt road surface.

The result was expressed as an index, and the larger index value means the better wet skid resistance (wet grip performance). The index was calculated by the following equation.

(Wet skid resistance) = (Braking distance of Comparative Example 1)/(Braking distance of each of Examples and Comparative Examples) × 100

[Table 1]

| | | Example 1 | Example 2 | Example 3 | Example 4 | Example 5 | Example 6 | Comparative Example 1 | Example 7 | Example 8 | Comparative Example 2 | Example 9 | Example 10 | Comparative Example 3 |
|---|---|---|---|---|---|---|---|---|---|---|---|---|---|---|
| Formulation (part(s) by weight) | SBR | - | - | - | - | - | - | 70 | - | - | 60 | - | - | 70 |
| | Polymer (1) | 70 | 70 | 70 | - | - | - | - | 60 | - | - | 70 | - | - |
| | Polymer (2) | - | - | - | 70 | 70 | 70 | - | - | 60 | - | - | 70 | - |
| | NR | 30 | 30 | 30 | 30 | 30 | 30 | 30 | 40 | 40 | 40 | 30 | 30 | 30 |
| | Silica (1) | 45 | 50 | 55 | 45 | 50 | 55 | 45 | 45 | 45 | 45 | 35 | 35 | 35 |
| | Silica (2) | 30 | 25 | 20 | 30 | 25 | 20 | 30 | 30 | 30 | 30 | 25 | 25 | 25 |
| | Carbon black | 10 | 10 | 10 | 10 | 10 | 10 | 10 | 10 | 10 | 10 | 10 | 10 | 10 |
| | Silane coupling agent | 4.8 | 4.8 | 4.8 | 4.8 | 4.8 | 4.8 | 4.8 | 4.8 | 4.8 | 4.8 | 4.8 | 4.8 | 4.8 |
| | Zinc oxide | 3 | 3 | 3 | 3 | 3 | 3 | 3 | 3 | 3 | 3 | 3 | 3 | 3 |
| | Stearic acid | 2 | 2 | 2 | 2 | 2 | 2 | 2 | 2 | 2 | 2 | 2 | 2 | 2 |
| | Antioxidant | 2 | 2 | 2 | 2 | 2 | 2 | 2 | 2 | 2 | 2 | 2 | 2 | 2 |
| | Wax | 2 | 2 | 2 | 2 | 2 | 2 | 2 | 2 | 2 | 2 | 2 | 2 | 2 |
| | Aromatic oil | 20 | 20 | 20 | 20 | 20 | 20 | 20 | 20 | 20 | 20 | 20 | 20 | 20 |
| | Sulfur | 2 | 2 | 2 | 2 | 2 | 2 | 2 | 2 | 2 | 2 | 2 | 2 | 2 |
| | Vulcanization accelerator (1) | 1.5 | 1.5 | 1.5 | 1.5 | 1.5 | 1.5 | 1.5 | 1.5 | 1.5 | 1.5 | 1.5 | 1.5 | 1.5 |
| | Vulcanization accelerator (2) | 1.2 | 1.2 | 1.2 | 1.2 | 1.2 | 1.2 | 1.2 | 1.2 | 1.2 | 1.2 | 1.2 | 1.2 | 1.2 |
| Evaluation result | Rolling performance index | 110 | 112 | 115 | 112 | 114 | 116 | 100 | 111 | 113 | 101 | 120 | 122 | 110 |
| | Wet grip performance index | 105 | 104 | 103 | 107 | 106 | 104 | 100 | 102 | 104 | 97 | 100 | 102 | 95 |

The results of Table 1 show that in Examples in which the modified SBR containing the nitrogen-containing compound monomer according to the present invention was used for a tread, the tires exhibited a suitable balance between favorable rolling performance and wet grip performance in comparison with the tires of Comparative Examples

in which SBR was used instead. The results also revealed that particularly when the terminal-modified copolymer was used, the balance between both performances was still better (Examples 4 to 6, 8 and 9).

## Claims

**1.** A rubber composition comprising a rubber component that contains a modified styrene-butadiene rubber in an amount of 5% by weight or more per 100% by weight of the rubber component, the modified styrene-butadiene rubber having, in a main chain thereof, a constitutional unit derived from a nitrogen-containing compound represented by the formula:

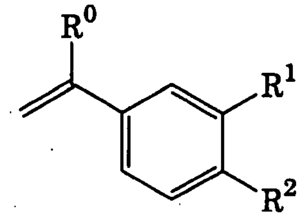

wherein (i) $R^1$ and $R^2$ are each hydrogen, the formula:

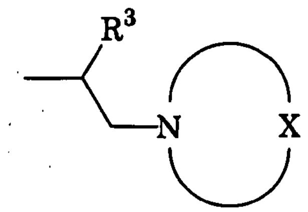

or the formula:

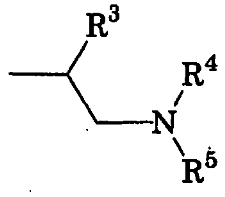

provided that at least one of $R^1$ and $R^2$ is not hydrogen,
(ii) $R^3$ represents hydrogen or a $C_{1-4}$ hydrocarbon group,
(iii) X represents a saturated ring-forming part consisting of $(CR^8R^9)_1$, $(CR^{10}R^{11})_m$-$NR^{12}$-$(CR^{13}R^{14})_n$, $(CR^{10}R^{11})_m$-O-$(CR^{13}R^{14})_n$, or $(CR^{10}R^{11})_m$-S-$(CR^{13}R^{14})_n$,
X may be substituted with the formula:

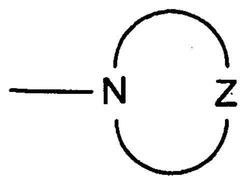

or the formula:

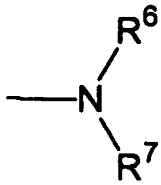

(iv) Z represents a saturated ring-forming part consisting of $(CR^8R^9)_1$, $(CR^{10}R^{11})_m$-$NR^{12}$-$(CR^{13}R^{14})_n$, $(CR^{10}R^{11})_m$-O-$(CR^{13}R^{14})_n$, or $(CR^{10}R^{11})_m$-S-$(CR^{13}R^{14})_n$,
(v) $R^4$ to $R^7$ each represent hydrogen, a $C_{1-30}$ aliphatic hydrocarbon group, a $C_{3-30}$ alicyclic hydrocarbon group, a $C_{5-30}$ aromatic hydrocarbon group, or a heterocyclic group containing 3 to 30 annular atoms, and are the same as or different from each other,
(vi) $R^0$, and $R^8$ to $R^{14}$ each represent hydrogen, a $C_{1-30}$ aliphatic hydrocarbon group, a $C_{3-30}$ alicyclic hydrocarbon group, or a $C_{5-30}$ aromatic hydrocarbon group, and are the same as or different from each other, and
(vii) 1 represents an integer of 3 to 10, and (viii) m and n each represent an integer of 1 to 9; and

the rubber composition further comprising silica in an amount of 10 to 150 parts by weight per 100 parts by weight of the rubber component,
wherein the silica comprises a silica (1) having an average primary particle size of 22 nm or more and a silica (2) having an average primary particle size of less than 22 nm, provided that the average primary particle sizes of the silica (1) and silica (2) satisfy the following equation:

$$(\text{Average primary particle size of Silica (1)})/(\text{Average primary particle size of Silica (2)}) \geq 1.4,$$

and
wherein 10 parts by weight or more of the silica (1) and 5 parts by weight or more of the silica (2) are contained relative to 100 parts by weight of the rubber component.

**2.** The rubber composition according to Claim 1,
wherein the modified styrene-butadiene rubber has at least one terminal further modified with a modifying agent having a functional group that contains at least one atom selected from the group consisting of nitrogen, oxygen and silicon.

**3.** The rubber composition according to Claim 1,
wherein the modified styrene-butadiene rubber is contained in an amount of 5 to 90 % by weight per 100 % by weight of the rubber component.

**4.** The rubber composition according to Claim 1,
wherein the rubber composition comprises a natural rubber.

**5.** The rubber composition according to Claim 1,
further comprising carbon black in an amount of 2 to 20 parts by weight per 100 parts by weight of the rubber component.

**6.** A tire comprising
a tread prepared using the rubber composition according to Claim 1.

**Patentansprüche**

**1.** Kautschukzusammensetzung enthaltend eine Kautschukkomponente, welche enthält:

einen modifizierten Styrol-Butadien-Kautschuk in einer Menge von 5 % oder mehr bezogen auf 100 % der Kautschukkomponente,

wobei der modifizierte Styrol-Butadien-Kautschuk in seiner Hauptkette eine konstitutionelle Einheit aufweist, welche von einer Stickstoff enthaltenden Verbindung stammt, welche durch die folgende Formel wiedergegeben wird:

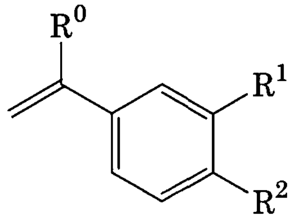

worin (i) $R^1$ und $R^2$ jeweils Wasserstoff, die Formel:

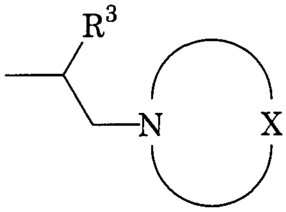

oder die folgende Formel sind:

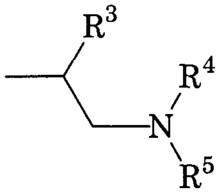

vorausgesetzt, dass wenigstens einer von $R^1$ und $R^2$ kein Wasserstoff ist,
(ii) $R^3$ Wasserstoff oder eine $C_{1-4}$-Kohlenwasserstoffgruppe ist,
(iii) X ein gesättigten Ring bildender Teil ist, welcher besteht aus $(CR^8R^9)_1$, $(CR^{10}R^{11})_m$-$NR^{12}$-$(CR^{13}R^{14})_n$, $(CR^{10}R^{11})_m$-O-$(CR^{13}R^{14})$n, oder $(CR^{10}R^{11})_m$-S-$(CR^{13}R^{14})_n$,
wobei X mit der folgenden Formel:

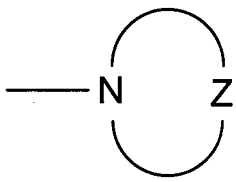

oder mit der Formel substituiert sein kann:

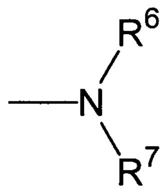

(iv) Z einen gesättigten Ring bildenden Teil bedeutet, welcher besteht aus $(CR^8R^9)_n$ $(CR^{10}R^{11})_m$-$NR^{12}$-$(CR^{13}R^{14})_n$, $(CR^{10}R^{11})_m$-O-$(CR^{13}R^{14})_n$ oder $(CR^{10}R^{11})_m$-S-$(CR^{13}R^{14})_n$,
(v) $R^4$ bis $R^7$ jeweils Wasserstoff, eine aliphatische $C_{1-30}$-Kohlenwasserstoffgruppe, eine alicyclische $C_{3-30}$-Kohlenstoffwasserstoffgruppe, eine aromatische $C_{5-30}$-Kohlenwasserstoffgruppe oder eine heterocyclische Gruppe enthaltend 3 bis 30 Ringatome und gleich oder verschieden voneinander sind,
(vi) $R^0$ und $R^8$ bis $R^{14}$ jeweils Wasserstoff, eine aliphatische $C_{1-30}$-Kohlenwasserstoffgruppe, eine alicyclische $C_{3-30}$-Kohlenstoffwasserstoffgruppe oder eine aromatische $C_{5-30}$-Kohlenwasserstoffgruppe und gleich oder voneinander verschieden sind sowie
(vii) l eine ganze Zahl zwischen 3 und 10 bedeutet und (viii) m und n jeweils eine ganze Zahl zwischen 1 und 9 bedeuten, und

die Kautschukzusammensetzung ferner Silica in einer Menge von 10 bis 150 Gewichtszahlen bezogen auf 100 Gewichtsteile der Kautschukkomponente enthält,
wobei das Silica ein Silica (1) mit einer durchschnittlichen primären Partikelgröße von 22 nm oder mehr und ein Silica (2) mit einer durchschnittlichen primären Partikelgröße von weniger als 22 nm enthält, vorausgesetzt, dass die durchschnittliche primäre Partikelgröße des Silicas (1) und des Silicas (2) der nachfolgenden Gleichung genügen:

(durchschnittliche primäre Partikelgröße von Silica (1))/(durchschnittliche primäre Partikelgröße von Silica (2)) $\geq$ 1,4

und
wobei 10 Gewichtsteile oder mehr des Silicas (1) und 5 Gewichtsteile oder mehr des Silicas (2) relativ zu 100 Gewichtsteilen der Kautschukkomponente enthalten sind.

**2.** Kautschukzusammensetzung nach Anspruch 1, wobei der modifizierte Styrol-Butadien-Kautschuk wenigstens eine terminale Gruppe aufweist, welche ferner mit einem Modifizierungsmittel mit einer funktionellen Gruppe modifiziert ist, welche wenigstens ein Atom ausgewählt aus der Gruppe bestehend aus Stickstoff, Sauerstoff und Silizium enthält.

**3.** Kautschukzusammensetzung nach Anspruch 1, wobei der modifizierte Styrol-Butadien-Kautschuk in einer Menge von 5 bis 90 % bezogen auf 100 % der Kautschukkomponente enthalten ist.

**4.** Kautschukzusammensetzung nach Anspruch 1, wobei die Kautschukzusammensetzung ferner ein Naturkautschuk enthält.

**5.** Kautschukzusammensetzung nach Anspruch 1, welche ferner Ruß in einer Menge von 2 bis 20 Gewichtszahlen bezogen auf 100 Gewichtsteile der Kautschukkomponente enthält.

**6.** Reifen enthaltend eine Lauffläche, welche unter Verwendung einer Kautschukzusammensetzung nach Anspruch 1 hergestellt worden ist.

## Revendications

**1.** Composition de caoutchouc comprenant un constituant de caoutchouc qui contient
un caoutchouc de styrène-butadiène modifié dans une quantité de 5 % en masse ou supérieure pour 100 % en

masse du constituant de caoutchouc,

le caoutchouc de styrène-butadiène modifié présentant, dans une chaîne principale de celui-ci, une unité constitutionnelle dérivée d'un composé contenant de l'azote représenté par la formule :

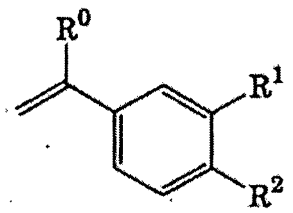

où (i) $R^1$ et $R^2$ sont chacun un atome d'hydrogène, la formule :

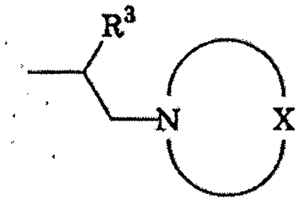

ou la formule :

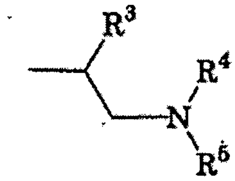

à condition qu'au moins un de $R^1$ et $R^2$ ne soit pas un atome d'hydrogène,

(ii) $R^3$ représente un atome d'hydrogène ou un groupe hydrocarboné en $C_{1-4}$,

(iii) X représente une partie formant un cycle saturé constituée de $(CR^8R^9)_1$, $(CR^{10}R^{11})_m$-$NR^{12}$-$(CR^{13}R^{14})_n$, $(CR^{10}R^{11})_m$-O-$(CR^{13}R^{14})_n$, ou $(CR^{10}R^{11})_m$-S-$(CR^{13}R^{14})_n$,

X peut être substitué avec la formule :

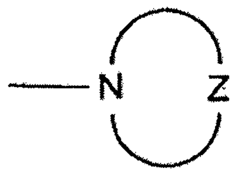

ou la formule :

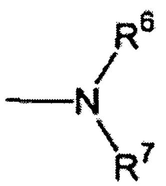

(iv) Z représente une partie formant un cycle saturé constituée de $(CR^8R^9)_1$, $(CR^{10}R^{11})_m$-$NR^{12}$-$(CR^{13}R^{14})_n$, $(CR^{10}R^{11})_m$-O-$(CR^{13}R^{14})_n$, ou $(CR^{10}R^{11})_m$-S-$(CR^{13}R^{14})_n$,
(v) $R^4$ à $R^7$ représentent chacun un atome d'hydrogène, un groupe hydrocarboné aliphatique en $C_{1-30}$, un groupe hydrocarboné alicyclique en $C_{3-30}$, un groupe hydrocarboné aromatique en $C_{5-30}$, ou un groupe hétérocyclique contenant de 3 à 30 atomes annulaires, et sont identiques ou différents l'un de l'autre,
(vi) $R^0$, et $R^8$ à $R^{14}$ représentent chacun un atome d'hydrogène, un groupe hydrocarboné aliphatique en $C_{1-30}$, un groupe hydrocarboné alicyclique en $C_{3-30}$, ou un groupe hydrocarboné aromatique en $C_{5-30}$, et sont identiques ou différents l'un de l'autre, et
(vii) l représente un nombre entier de 3 à 10, et
(viii) m et n représentent chacun un nombre entier de 1 à 9 ; et

la composition de caoutchouc comprenant de plus de la silice dans une quantité de 10 à 150 parties en masse pour 100 parties en masse du constituant de caoutchouc,
dans laquelle la silice comprend une silice (1) présentant une taille moyenne de particule primaire de 22 nm ou supérieure et une silice (2) présentant une taille moyenne de particule primaire inférieure à 22 nm, à condition que les tailles moyennes de particule primaire de la silice (1) et de la silice (2) satisfont l'équation suivante :

$$\text{(taille moyenne de particule primaire de silice (1))/(taille moyenne de particule primaire de silice (2))} \geq 1{,}4,$$

et
dans laquelle 10 parties en masse ou plus de la silice (1) et 5 parties en masse ou plus de la silice (2) sont contenues par rapport à 100 parties en masse du constituant de caoutchouc.

**2.** Composition de caoutchouc selon la revendication 1, dans laquelle le caoutchouc de styrène-butadiène modifié présente au moins une terminaison modifiée en plus avec un agent de modification présentant un groupe fonctionnel qui contient au moins un atome choisi dans le groupe constitué de l'azote, de l'oxygène et du silicium.

**3.** Composition de caoutchouc selon la revendication 1, dans laquelle le caoutchouc de styrène-butadiène modifié est contenu dans une quantité de 5 à 90 % en masse pour 100 % en masse du constituant de caoutchouc.

**4.** Composition de caoutchouc selon la revendication 1, dans laquelle la composition de caoutchouc comprend un caoutchouc naturel.

**5.** Composition de caoutchouc selon la revendication 1, comprenant de plus du noir de carbone dans une quantité de 2 à 20 parties en masse pour 100 parties en masse du constituant de caoutchouc.

**6.** Pneu comprenant
une bande de roulement préparée en utilisant la composition de caoutchouc selon la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003192842 A
- US 6693160 B1
- US 20040044157 A1
- EP 1882716 A1